# EUROPÄISCHE PATENTANMELDUNG

(11) **EP 4 435 904 A1**
(43) Veröffentlichungstag der Anmeldung: **25.09.2024**
(21) Anmeldenummer: 23163520.2
(22) Anmeldetag: 22.03.2023
(51) Int. Cl.: H01M 6/52, H01M 10/54, B09B 3/00

(54) **VERFAHREN ZUR VERWERTUNG EINER BATTERIE**

(71) Anmelder: ERMAFA Environmental Technologies GmbH, 1110 Wien (AT)
(72) Erfinder: PÖLZLBAUER, Karl Peter, 1010 Wien (AT)
(74) Vertreter: SONN Patentanwälte GmbH & Co KG

(57) **Zusammenfassung**

Die Erfindung betrifft ein Verfahren zur Verwertung einer Batterie, umfassend die Schritte: (a) Bereitstellen einer zumindest teilweise entladenen Batterie, (b) Zerkleinern der zumindest teilweise entladenen Batterie in einem Prozessraum (11), um Batterieteile zu erhalten, (c) Trocknen der Batterieteile in einem Prozessraum (11), um getrocknete Batterieteile und ein abgetrenntes Gas zu erhalten, und (d) Verpacken der getrockneten Batterieteile in eine Verpackung, dadurch gekennzeichnet, dass die Schritte (b) und (c) im selben Prozessraum (11) durchgeführt werden. Die Erfindung betrifft weiters eine mobile Vorrichtung zur Verwertung einer Batterie mit dem Verfahren, und eine Verpackung, in welcher 1 bis 30 kg Batterieteile enthalten sind, erhältlich durch das Verfahren.

## Beschreibung

Die vorliegende Erfindung betrifft ein Verfahren und eine mobile Vorrichtung zur Verwertung einer Batterie. Weiters betrifft die Erfindung eine Verpackung, in welcher 1 bis 30 kg Batterieteile enthalten sind.

Verfahren und Vorrichtungen zur Verwertung von Batterien, insbesondere Altbatterien, sind im Stand der Technik bekannt. Beispielsweise beschreibt die EP 3 312 922 A1 ein Verfahren und eine Anlage zur Verwertung gebrauchter Batterien. Die Batterien werden zunächst in einer Entladungseinheit entladen. Anschließend werden sie einer Zerkleinerungseinheit zugeführt, wo sie unter Schutzgas zerkleinert werden. Nach der Zerkleinerung werden die erhaltenen Batterieteile mit einem ersten gasdichten Förderer zu einer Trocknungseinheit gefördert. Währen der Trocknung der Batterieteile wird ein Elektrolyt abgetrennt. Die getrockneten, inaktivierten Batterieteile werden anschließend mit einem zweiten Förderer zu einer Verpackungseinheit gefördert, wo sie in einen Transportbehälter abgefüllt werden.

Es besteht ein Bedarf an einer weiteren Erhöhung der Flexibilität von Verfahren und Vorrichtungen zur Verwertung von Batterien. Eine Aufgabe der vorliegenden Erfindung ist die Bereitstellung eines solchen flexiblen Verfahrens und einer solchen flexiblen Vorrichtung.

Diese Aufgabe wird erfindungsgemäß dadurch gelöst, dass das Verfahren zur Verwertung einer Batterie die folgenden Schritte umfasst:
(a) Bereitstellen einer zumindest teilweise entladenen Batterie,
(b) Zerkleinern der zumindest teilweise entladenen Batterie in einem Prozessraum, um Batterieteile zu erhalten,
(c) Trocknen der Batterieteile in einem Prozessraum, um getrocknete Batterieteile und ein abgetrenntes Gas zu erhalten, und
(d) Verpacken der getrockneten Batterieteile in eine Verpackung,
dadurch gekennzeichnet, dass die Schritte (b) und (c) im selben Prozessraum durchgeführt werden.

Durch das Durchführen des Zerkleinerns und des Trocknens im selben Prozessraum kann das Verfahren vereinfacht und sehr effizient gestaltet werden, da eine Einstellung von Prozessparametern (z.B. Druck, Temperatur) nur für diesen einen Prozessraum ausreichend ist. Weiters kann das Trocknen unmittelbar nach dem Zerkleinern erfolgen. Dies hat den Vorteil, dass eine zwischengelagerte Menge an noch nicht getrockneten Batterieteilen verringert werden kann, bzw. dass eine Zwischenlagerung gar nicht erst erforderlich ist. Eine Zwischenlagerung noch nicht getrockneter Batterieteile ist in prozesstechnischer Hinsicht aufwändig, da aus solchen Batterieteilen ein gesundheitsschädlicher, brennbarer Dampf austreten kann, und diese Batterieteile daher unter kontrollierten Bedingungen gelagert werden müssen. Vorzugsweise wird mit dem Trocknen innerhalb von 10 min nach einer Beendigung des Zerkleinerns begonnen, bevorzugter innerhalb von 3 min, besonders bevorzugt innerhalb von 1 min.

Die in Schritt (a) bereitgestellte Batterie weist vorzugsweise eine Spannung von 2,5 V pro Zelle oder darunter auf, bevorzugter 1 V pro Zelle oder darunter, besonders bevorzugt 0,1 V pro Zelle oder darunter. Hierfür kann die Batterie vor Schritt (a) zumindest teilweise entladen werden. Die Messung der Spannung kann mittels eines Voltmeters in Reihenschaltung durchgeführt werden. Falls das zumindest teilweise Entladen nicht bereits erfolgt ist (z.B. durch eine vorhergehende bestimmungsgemäße Verwendung der Batterie), kann durch das in das Verfahren integrierte Entladen die Betriebs- und Prozesssicherheit der nachfolgenden Schritte des Verfahrens verbessert werden, insbesondere kann die Gefahr einer thermischen Überlastung durch einen Kurzschluss, wodurch es zum Entstehen eines Brands oder dem spontanen Entzünden einer entzündlichen Atmosphäre kommen könnte, reduziert werden.

Die in Schritt (a) bereitgestellte Batterie kann durch Zerlegen eines Batteriemoduls oder eines Batteriepacks erhalten werden. Unter einem Batteriemodul wird dabei die Kombination von zwei oder mehr Batterien verstanden. Unter einem Batteriepack wird die Kombination von zwei oder mehr Batteriemodulen verstanden, auch ein Batteriesystem (ähnlich einem Batteriepack, kann aber zusätzliche Komponenten aufweisen, z.B. ein Kühlungs- und/oder Managementsystem) ist im Rahmen dieser Anmeldung als von einem Batteriepack umfasst anzusehen. Bevorzugt ist es, wenn das Zerlegen nach einem Entladen der Batterie erfolgt. Das Batteriemodul bzw. der Batteriepack kann sich dann in einem spannungsfreien bzw. zumindest spannungsarmen Zustand befinden, was sicherheitstechnisch vorteilhaft sein kann.

Vor dem Zerkleinern kann ein Gehäuse der Batterie geöffnet werden. Dadurch kann das nachfolgende Trocknen der zerkleinerten Batterieteile effizienter durchgeführt werden, da das Gas einfacher abgetrennt werden kann.

Im Prozessraum ist vorzugsweise eine Schutzatmosphäre vorgesehen. Unter einer Schutzatmosphäre wird eine Atmosphäre mit einem kontrollierten Druck, einer kontrollierten Temperatur und einer kontrollierten Zusammensetzung verstanden. Damit können das Zerkleinern und das Trocknen kontrolliert, sicher und reproduzierbar durchgeführt werden. Die Schutzatmosphäre kann mittels eines fraktionierten Vakuumverfahrens hergestellt werden. Dadurch kann die Schutzatmosphäre rasch aufgebaut werden.

Die Schutzatmosphäre umfasst vorzugsweise zumindest 85 Vol% eines inerten Gases, bevorzugter zumindest 95 Vol%, besonders bevorzugt zumindest 98 Vol%, bezogen auf das Gesamtvolumen der Schutzatmosphäre. Das inerte Gas umfasst bevorzugt Stickstoff, da hiermit eine Explosion oder Entzündung der Batterieteile gut vermieden werden kann.

Bevorzugt liegt ein Wasserpartialdruck der Schutzatmosphäre bei 100 Pa oder darunter, bevorzugt bei 70 Pa oder darunter, besonderes bevorzugt bei 50 Pa oder darunter. Dadurch kann die Zersetzung von Bestandteilen der Batterie, insbesondere Hexafluorophosphat, vermieden werden, und damit einhergehend die Bildung von Lithium-Hydroxid-Verbindungen oder Fluor-Wasserstoffverbindungen.

Weiters ist es bevorzugt, wenn ein Sauerstoffpartialdruck der Schutzatmosphäre bei 100 mbar oder darunter liegt, bevorzugter bei 50 mbar oder darunter, besonders bevorzugt bei 30 mbar oder darunter. Dadurch kann nicht nur die Korrosion der Komponenten der erfindungsgemäßen Vorrichtung reduziert werden, sondern auch die Neigung zur Bildung von molekularem Wasserstoff, der gemeinsam mit Sauerstoff eine zündfähige Atmosphäre bilden könnte, kann verringert werden.

In Schritt (b) des Verfahrens wird die zumindest teilweise entladene Batterie im Prozessraum zerkleinert, um Batterieteile zu erhalten. Dadurch kann die spezifische freie Oberfläche der Batterie vergrößert werden, was die Effizienz der nachfolgenden Verfahrensschritte erhöhen kann.

Das Zerkleinern kann unter Vakuum durchgeführt werden, vorzugsweise bei einem Druck im Prozessraum von 100 mbar oder darunter, bevorzugter bei 50 mbar oder darunter, besonders bevorzugt bei einem Druck im Bereich von 10 bis 50 mbar. Dadurch kann ein Druck, der nachfolgend für das Trocknen verwendet werden kann, bereits vor dem Zerkleinern eingestellt werden, sodass das Trocknen effizient erfolgen kann.

Alternativ kann das Zerkleinern bei Normaldruck im Prozessraum durchgeführt werden. Unter einem Normaldruck wird ein Druck im Bereich von 1 bis 1,1 bar verstanden. Ein für das Trocknen verwendeter Druck kann dann nach Schritt (b) oder auch schon währenddessen eingestellt werden. So kann insbesondere dann vorgegangen werden, wenn der Prozessraum nach Schritt (b) verkleinert wird, wie weiter unten beschrieben.

Das Zerkleinern kann bei einer Temperatur von 20 bis 200 °C im Prozessraum durchgeführt werden. Vorzugsweise wird das Zerkleinern bei 20 bis 30 °C durchgeführt. Dadurch kann das Verfahren energieeffizienter durchgeführt werden. Wird eine feuchte Batterie bereitgestellt, kann es hingegen vorteilhaft sein, die Temperatur beim Zerkleinern zu erhöhen, sodass in der Batterie enthaltenes Wasser verdampfen kann. Vorzugsweise erfolgt das Zerkleinern dann bei einer Temperatur von 40 °C oder darüber, bevorzugter bei 60 °C oder darüber, noch bevorzugter bei einer Temperatur im Bereich von 90 bis 200 °C, besonders bevorzugt von 90 bis 150 °C.

Die Batterieteile weisen vorzugsweise einen Durchmesser oder eine maximale Ausdehnung (z.B. eine maximale Länge) von 100 mm oder darunter auf, bevorzugter 50 mm oder darunter, besonders bevorzugt 20 mm oder darunter. Dies kann aufgrund der großen spezifischen freien Oberfläche der Batterieteile nicht nur die Effizienz der Trocknung maßgeblich erhöhen, sondern auch das nachfolgende Verpacken der Batterieteile verbessern. Auch kann dadurch eine Weiterverarbeitung der Batterieteile, insbesondere eine metallurgische Aufbereitung, um Rohstoffe zu gewinnen, vereinfacht werden.

Der Prozessraum kann nach Schritt (b) verkleinert werden. Für diese Zwecke kann eine Trennvorrichtung im Prozessraum angeordnet sein. Dann braucht beim nachfolgenden Trocknen nicht mehr der gesamte Prozessraum beheizt werden und/oder unter Vakuum betrieben werden, und die Schutzatmosphäre braucht nicht mehr im gesamten Prozessraum aufrechterhalten werden. Eine Verkleinerung des Prozessraums kann nicht nur hinsichtlich des Energieverbrauchs vorteilhaft sein, sondern auch das Trocknen kann schneller und gleichmäßiger erfolgen, weil der verbleibende Prozessraum schneller auf eine bestimmte Temperatur und/oder einen bestimmten Druck gebracht werden kann.

In Schritt (c) des Verfahrens werden die Batterieteile im Prozessraum getrocknet, um getrocknete Batterieteile und ein abgetrenntes Gas zu erhalten. Das abgetrennte Gas kann über einen Filter abgezogen werden, bevorzugt über einen Brüdenfilter.

Das Trocknen in Schritt (c) kann unter Vakuum im Prozessraum durchgeführt werden, vorzugsweise bei einem Druck von 100 mbar oder darunter, bevorzugter bei 50 mbar oder darunter, besonders bevorzugt bei einem Druck im Bereich von 10 bis 50 mbar. Dadurch kann ein Dampfdruck des abzutrennenden Gases, insbesondere des Elektrolyten, unterschritten werden.

Wird Schritt (c) unter Vakuum durchgeführt, kann zum Erzeugen des Vakuums im Prozessraum eine Vakuumpumpe in einem Hysteresemodus betrieben werden. Dadurch kann der Druck im Prozessraum rasch reduziert werden. Auch kann dadurch eine Einschaltdauer der Vakuumpumpe verringert werden. Unter einem "Hysteresemodus" wird ein Betriebsmodus der Vakuumpumpe verstanden, in welchem die Leistung der Vakuumpumpe zwischen einen Minimalwert und einem Maximalwert alterniert. Vorzugsweise alterniert die Leistung der Vakuumpumpe zwischen 0 und 150 kW, bevorzugter zwischen 0 und 100 kW, besonders bevorzugt zwischen 0 und 60 kW.

Vorzugsweise erfolgt das Trocknen in Schritt (c) bei einer Temperatur im Prozessraum von 60 °C oder darüber, bevorzugt bei einer Temperatur im Bereich von 90 bis 200 °C. Dadurch kann die Trocknung effizient ablaufen, und die Gefahr einer Zersetzung von in den zerkleinerten Batterieteilen enthaltenen Komponenten kann geringgehalten werden.

Bevorzugt erfolgt das Trocknen in Schritt (c) bei einer Temperatur im Prozessraum im Bereich von 90 bis 200 °C und einem Druck von 50 mbar oder darunter. Dadurch kann sichergestellt werden, dass der Dampfdruck des abzutrennenden Gases, insbesondere des Elektrolyten, unterschritten wird, was eine effektive und schnelle Abtrennung von den zerkleinerten Batterieteilen ermöglicht.

Vorzugsweise enthält die bereitgestellte Batterie einen Elektrolyten, der im abgetrennten Gas zumindest teilweise enthalten ist. Ein Siedepunkt bzw. ein oberes Ende eines Siedebereichs des in der Batterie enthaltenen Elektrolyten liegt bei einem Druck von 10 mbar vorzugsweise bei 180 °C oder darunter, bevorzugter bei 150 °C oder darunter, besonders bevorzugt bei 130 °C oder darunter. Dadurch kann der Elektrolyt beim Trocknen in Schritt (c) effizient und möglichst vollständig abgetrennt werden. Dadurch kann die Batterie inaktiviert werden, und eine nachfolgende elektrochemische Reaktion und das Entstehen eines explosiven Gasgemischs können vermieden werden. Vorzugsweise liegt nach Schritt (c) ein verbleibender Anteil des Elektrolyten in den Batterieteilen bei 0,1 Gew% oder darunter, bevorzugt bei 0,01 Gew% oder darunter, besonders bevorzugt bei 0,002 Gew% oder darunter, bezogen auf das Gesamtgewicht der Batterieteile.

Vorzugsweise wird das Verpacken in Schritt (d) im selben Prozessraum durchgeführt wie die Schritte (b) und (c). Dadurch kann das Verpacken der getrockneten Batterieteile in einer kontrollierten Umgebung durchgeführt werden. Beispielsweise können ein Kondensieren von Wasserdampf auf den Batterieteilen und/oder eine Verunreinigung der Batterieteile vor dem Verpacken vermieden werden.

Das Verpacken kann unter Normaldruck durchgeführt werden. Jedoch kann, wenn Schritt (d) im selben Prozessraum durchgeführt wird wie die Schritte (b) und (c), ein im Prozessraum beim Trocknen vorherrschender Druck auch für das Verpacken beibehalten werden. Dadurch kann die Atmosphäre im Prozessraum konstant gehalten werden.

Die getrockneten Batterieteile können in einer kunststoffhaltigen Verpackung verpackt werden, vorzugsweise in einer Barriereverpackung. Dadurch können die Batterieteile gasdicht und/oder wasserdicht verpackt werden. Vorzugsweise werden die Batterieteile so verpackt, dass das Entstehen einer zündfähigen Atmosphäre für mindestens vier Wochen bei einer Temperatur von 50 °C und Normaldruck ausgeschlossen ist.

Die getrockneten Batterieteile können in einer Vakuumverpackung verpackt werden. Die Verpackung kann auch verschweißt werden. Dadurch können die Batterieteile besonders gut vor Umwelteinflüssen geschützt werden.

Die getrockneten Batterieteile werden in Schritt (d) vorzugsweise zu je 1 bis 30 kg verpackt, vorzugsweise zu je 1 bis 25 kg, bevorzugter zu je 1 bis 20 kg. Dadurch können die verpackten Batterieteile von einer Person einfach getragen und transportiert werden, was die Flexibilität des Verfahrens weiter verbessert.

Das Verfahren kann einen weiteren Schritt (e) umfassen: Abtrennen eines Elektrolyten vom abgetrennten Gas. Bevorzugt liegt der Anteil des Elektrolyten am Gesamtgewicht des Gases bei 50 Gew% oder darüber, bevorzugter bei 70 Gew% oder darüber, besonders bevorzugt bei 90 Gew% oder darüber.

Der Elektrolyt kann durch Kondensation vom Gas abgetrennt werden. Hierfür wird das abgetrennte Gas vorzugsweise auf eine Temperatur von 30 °C oder darunter abgekühlt, bevorzugt auf 15 °C oder darunter, besonders bevorzugt auf 5 °C oder darunter. Der Anteil des abgetrennten und somit rückgewonnenen Elektrolyten liegt vorzugsweise bei 95 Gew% oder darüber, bevorzugter bei 99 Gew% oder darüber, bezogen auf das Gesamtgewicht des in der bereitgestellten Batterie enthaltenen Elektrolyten. Dadurch kann das Verfahren erheblich zur Kreislaufwirtschaft und Nachhaltigkeit beitragen.

Nach Schritt (e) kann das abgetrennte Gas gereinigt werden. Dabei können saure Bestandteile des Gases, etwa Fluorwasserstoff und/oder Phosphorpentafluorid, zumindest teilweise entfernt werden. Diese Bestandteile können weiteren Verwendungen zugeführt werden.

Nach Schritt (e) kann ein im abgetrennten Gas enthaltener Stickstoff zumindest teilweise abgetrennt werden. Der abgetrennte Stickstoff kann im Verfahren für die Schutzatmosphäre umfassend ein inertes Gas verwendet werden, wenn die Schritte (b), (c), und ggf. (d), unter einer solchen Schutzatmosphäre durchgeführt werden. Vor der Rückführung in das Verfahren kann der Stickstoff gereinigt werden, insbesondere, um einen Rest des Elektrolyten davon abzutrennen.

Die Erfindung betrifft weiters eine mobile Vorrichtung zur Verwertung einer Batterie mit dem erfindungsgemäßen Verfahren, aufweisend
eine Aufgabeeinheit zum Aufgeben der zumindest teilweise entladenen Batterie,
eine Zerkleinerungseinheit zum Zerkleinern der zumindest teilweise entladenen Batterie,
eine Trocknungseinheit zum Trocknen der Batterieteile, und
eine Verpackungseinheit zum Verpacken der getrockneten Batterieteile,
dadurch gekennzeichnet, dass die Zerkleinerungseinheit und die Trocknungseinheit im selben Prozessraum angeordnet sind.

Unter einer "mobilen Vorrichtung" wird in dieser Anmeldung eine Vorrichtung verstanden, die mit einem Lastkraftwagen, insbesondere einem Sattelkraftfahrzeug gemäß der Richtlinie 96/53/EG des Rates vom 25. Juli 1996, transportierbar und daher flexibel örtlich einsetzbar ist.

Die mobile Vorrichtung kann eingerichtet sein, in einem Container untergebracht zu werden. Der erfindungsgemäß verwendete Container kann ein Container nach der Norm ISO 668:2020-01 sein. Ein genormter Container kann unkompliziert transportiert werden, etwa mit einem LKW, einem Güterzug oder einem Frachtschiff. Vorzugsweise ist der Container ein 40-Fuß-Container, bevorzugter ein 20-Fuß-Container, besonders bevorzugt ein 10-Fuß-Container. Unter einem 40-Fuß-Container wird ein Container mit ungefähr 12,2 m Länge, 2,4 m Breite und 2,6 m Höhe verstanden. Unter einem 20-Fuß-Container wird ein Container mit ungefähr 6,1 m Länge, 2,4 m Breite und 2,6 m Höhe verstanden. Unter einem 10-Fuß-Container wird ein Container mit ungefähr 3 m Länge, 2,4 m Breite und 2,6 m Höhe verstanden.

Der Container kann unter einem geringen Zeitaufwand, insbesondere innerhalb von 8 h oder weniger, verladen werden, und nachfolgend an einen anderen Einsatzort transportiert werden, wo er ebenfalls unter einem geringen Zeitaufwand, insbesondere innerhalb von 8 h oder weniger, in einen einsatzfähigen Zustand gebracht werden kann. Weiters wird erfindungsgemäß kein spezielles Fundament, etwa eine Einhausung in Form einer Halle, benötigt. Die Erfindung ermöglicht somit einen unkomplizierten und flexiblen Einsatz des Verfahrens je nach Bedarf, um eine Batterie, insbesondere eine Altbatterie, direkt an Ort und Stelle zu verwerten. Das Verfahren kann auch direkt im Container durchgeführt werden. Dann kann die mobile Vorrichtung auch während der Durchführung des Verfahrens im Container untergebracht sein, was die Flexibilität weiter verbessern kann, da ein Verladen und Entladen entfallen kann.

Im Prozessraum ist vorzugsweise eine Trennvorrichtung angeordnet, die eingerichtet ist, die Aufgabeeinheit und die Zerkleinerungseinheit von der Trocknungseinheit und der Verpackungseinheit zu trennen. Die Trennvorrichtung kann eine Tür aufweisen, insbesondere eine Schiebetür oder eine Klapptür. Durch das Vorsehen der Trennvorrichtung können gewisse Prozessabläufe vereinfacht bzw. effizienter gestaltet werden. Beispielsweise kann die Trennvorrichtung geschlossen werden, nachdem die Batterieteile der Trocknungseinheit zugeführt wurden. Dann braucht beim Trocknen nicht mehr der gesamte Prozessraum beheizt werden und/oder unter Vakuum betrieben werden, und die Schutzatmosphäre braucht nicht mehr im gesamten Prozessraum aufrechterhalten werden. Auch können Prozessparameter (z.B. Druck, Temperatur) in der Trocknungseinheit dann schneller eingestellt werden.

Die Trennvorrichtung kann ein feuerfestes Material umfassen, vorzugsweise Stahl und/oder Aluminium. Falls es zu einem spontanen Entzünden oder einer thermischen Überlastung während des Verfahrens kommt, kann die Trennvorrichtung geschlossen werden, sodass ein Schaden räumlich begrenzt werden kann.

Die mobile Vorrichtung weist vorzugsweise eine Einheit zum Einspeisen eines inerten Gases in den Prozessraum auf. Das inerte Gas kann in einem Behälter vorgesehen sein, wobei der Behälter über eine Leitung mit dem Prozessraum verbunden sein kann, um das inerte Gas über eine Einlassöffnung oder über mehrere Einlassöffnungen in den Prozessraum einzuspeisen. Vorzugsweise sind zwei Einlassöffnungen vorgesehen, um das inerte Gas in den Prozessraum einzuspeisen, wobei die Einspeisung des inerten Gases bevorzugt über eine erste Einlassöffnung in die Zerkleinerungseinheit und über eine zweite Einlassöffnung in die Trocknungseinheit erfolgt.

An den Prozessraum ist vorzugsweise eine Vakuumpumpe zum Aufbau einer Schutzatmosphäre angeschlossen. Da die Zerkleinerungseinheit und die Trocknungseinheit im selben Prozessraum angeordnet sind, kann eine Vakuumpumpe ausreichend sein, um einen bestimmten Druck zu erzeugen. Je nach Leistung der Vakuumpumpe können auch zwei oder mehr Vakuumpumpen verwendet werden.

Die Zerkleinerungseinheit kann eine Rotorschere aufweisen. Diese eignet sich gut zum Zerkleinern sperriger Stoffe, wie Batterien.

Die Trocknungseinheit kann einen Schaufeltrockner aufweisen. Dabei kann es sich um einen Schaufeltrockner handeln. Dieser kann horizontal oder vertikal angeordnet sein. Dadurch können die Batterieteile gut durchmischt und somit gleichmäßig getrocknet werden.

Die Trocknungseinheit kann einen Filter zum Abziehen des Gases aufweisen. Der Filter ist vorzugsweise ein Brüdenfilter. Dadurch kann nicht nur das Gas effizient abgezogen werden, sondern können auch Staubpartikel abgeschieden und somit aus dem Prozessraum entfernt werden. Dem Filter kann ein Verdampfer nachgeschaltet sein, um den Elektrolyten durch Kondensation vom Gas abzutrennen.

Die Trocknungseinheit ist vorzugsweise ein Autoklav. Dadurch kann eine gute Gasdichtheit bereitgestellt werden.

Vorzugsweise ist die Trocknungseinheit unterhalb von der Zerkleinerungseinheit angeordnet. Dann können die Batterieteile schwerkraftsbedingt von der Zerkleinerungseinheit in die Trocknungseinheit fallen, sobald Schritt (b) abgeschlossen ist. Somit fallen keine noch nicht getrockneten Batterieteile an, die zwischengelagert werden müssten. Auch kann die Größe des Prozessraums dadurch geringgehalten werden, da keine Transportvorrichtung (z.B. Förderer) vorgesehen werden muss, um die Batterieteile von der Zerkleinerungseinheit zur Trocknungseinheit zu transportieren. Die räumliche Anordnung ("unterhalb") bezieht sich auf den bestimmungsgemäßen Betriebszustand der mobilen Vorrichtung.

Vorzugsweise ist die Verpackungseinheit unterhalb von der Trocknungseinheit angeordnet. Dann können die getrockneten Batterieteile schwerkraftsbedingt von der Trocknungseinheit in die Verpackungseinheit fallen, sobald Schritt (c) abgeschlossen ist. Das Verfahren kann somit noch effizienter gestaltet werden, da keine Transportvorrichtung (z.B. Förderer) vorgesehen werden muss, um die Batterieteile von der Trocknungseinheit zur Verpackungseinheit zu transportieren. Wenn die Verpackungseinheit im selben Prozessraum angeordnet ist wie die Zerkleinerungseinheit und die Trocknungseinheit, kann durch diese Anordnung die Größe des Prozessraums geringgehalten werden.

Die mobile Vorrichtung kann weiters eine Entladungseinheit zum zumindest teilweise Entladen der Batterie aufweisen, wobei die Entladungseinheit vor der Aufgabeeinheit angeordnet ist. Falls das zumindest teilweise Entladen nicht bereits erfolgt ist (z.B. durch eine vorhergehende bestimmungsgemäße Verwendung der Batterie), kann durch die Entladungseinheit die Betriebs- und Prozesssicherheit der nachfolgenden Schritte des Verfahrens verbessert werden.

Die mobile Vorrichtung kann weiters eine Demontageeinheit zum Zerlegen eines Batteriemoduls oder eines Batteriepacks aufweisen, wobei die Demontageeinheit vor der Aufgabeeinheit angeordnet ist. Wenn die mobile Vorrichtung eine Entladungseinheit aufweist, ist die Demontageeinheit der Entladungseinheit vorzugsweise nachgeordnet. Das Batteriemodul bzw. der Batteriepack kann sich dann in einem spannungsfreien bzw. zumindest spannungsarmen Zustand befinden, was sicherheitstechnisch vorteilhaft sein kann.

Die Erfindung betriff außerdem eine Verpackung, in welcher 1 bis 30 kg Batterieteile enthalten sind, erhältlich durch das erfindungsgemäße Verfahren. Vorzugsweise sind in der Verpackung 1 bis 25 kg Batterieteile in der Verpackung verpackt, bevorzugter 1 bis 20 kg. Die Verpackung kann somit von einer Person einfach getragen und transportiert werden.

Die verpackten Batterieteile weisen vorzugsweise einen Durchmesser oder eine maximale Ausdehnung von 100 mm oder darunter auf, bevorzugter 50 mm oder darunter, besonders bevorzugt 20 mm oder darunter. Dadurch kann aufgrund der großen spezifischen freien Oberfläche der Batterieteile eine Weiterverarbeitung, insbesondere eine metallurgische Aufbereitung zur Gewinnung von Rohstoffen, vereinfacht werden.

Die Batterieteile weisen vorzugsweise einen Anteil eines Elektrolyten von 0,1 Gew% oder darunter auf, bevorzugter 0,01 Gew% oder darunter, besonders bevorzugt 0,002 Gew% oder darunter, bezogen auf das Gesamtgewicht der Batterieteile. Dadurch kann eine sichere Handhabung erreicht werden. Insbesondere kann das Entstehen einer zündfähigen Atmosphäre für mindestens vier Wochen bei einer Temperatur von 50 °C und Normaldruck ausgeschlossen werden.

Die Verpackung kann eine kunststoffhaltige Verpackung sein, vorzugsweise eine Barriereverpackung. Dadurch können die Batterieteile gasdicht und/oder wasserdicht verpackt werden.

Die Verpackung kann verschweißt sein und/oder eine Vakuumverpackung sein. Dadurch können die Batterieteile besonders gut vor Umwelteinflüssen geschützt werden.

Die Erfindung betrifft insbesondere die folgenden Ausführungsformen:
1. Verfahren zur Verwertung einer Batterie, insbesondere einer Altbatterie, umfassend die Schritte
   (a) Bereitstellen einer zumindest teilweise entladenen Batterie,
   (b) Zerkleinern der zumindest teilweise entladenen Batterie in einem Prozessraum, um Batterieteile zu erhalten,
   (c) Trocknen der Batterieteile in einem Prozessraum, um getrocknete Batterieteile und ein abgetrenntes Gas zu erhalten, und
   (d) Verpacken der getrockneten Batterieteile in eine Verpackung,
   wobei die Schritte (b) und (c) im selben Prozessraum durchgeführt werden.
2. Verfahren nach der vorhergehenden Ausführungsform, wobei die Batterie eine Lithium-Ionen-Batterie ist.
3. Verfahren nach einer der vorhergehenden Ausführungsformen, wobei die bereitgestellte Batterie eine Spannung von 2,5 V pro Zelle oder darunter aufweist, bevorzugt 1 V pro Zelle oder darunter, besonders bevorzugt 0,1 V pro Zelle oder darunter.
4. Verfahren nach einer der vorhergehenden Ausführungsformen, wobei die Batterie vor Schritt (a) entladen wird.
5. Verfahren nach einer der vorhergehenden Ausführungsformen, wobei die in Schritt (a) bereitgestellte Batterie durch Zerlegen eines Batteriemoduls oder eines Batteriepacks erhalten wird.
6. Verfahren nach einer der vorhergehenden Ausführungsformen, wobei ein Gehäuse der Batterie vor dem Zerkleinern geöffnet wird.
7. Verfahren nach einer der vorhergehenden Ausführungsformen, wobei im Prozessraum eine Schutzatmosphäre vorgesehen ist.
8. Verfahren nach Ausführungsform 7, wobei die Schutzatmosphäre mittels eines fraktionierten Vakuumverfahrens hergestellt wird.
9. Verfahren nach Ausführungsform 7 oder 8, wobei die Schutzatmosphäre zumindest 85 Vol% eines inerten Gases umfasst, bevorzugt zumindest 95 Vol%, besonders bevorzugt zumindest 98 Vol%, bezogen auf das Gesamtvolumen der Schutzatmosphäre.
10. Verfahren nach Ausführungsform 9, wobei das inerte Gas Stickstoff umfasst.
11. Verfahren nach einer der Ausführungsformen 7 bis 10, wobei ein Wasserpartialdruck der Schutzatmosphäre bei 100 Pa oder darunter liegt, bevorzugt bei 70 Pa oder darunter, besonderes bevorzugt bei 50 Pa oder darunter.
12. Verfahren nach einer der Ausführungsformen 7 bis 11, wobei ein Sauerstoffpartialdruck der Schutzatmosphäre bei 100 mbar oder darunter liegt, bevorzugter bei 50 mbar oder darunter, besonders bevorzugt bei 30 mbar oder darunter.
13. Verfahren nach einer der vorhergehenden Ausführungsformen, wobei das Zerkleinern in Schritt (b) unter Vakuum durchgeführt wird, vorzugsweise bei einem Druck im Prozessraum von 100 mbar oder darunter, bevorzugter bei 50 mbar oder darunter, besonders bevorzugt bei einem Druck im Bereich von 10 bis 50 mbar.
14. Verfahren nach einer der Ausführungsformen 1 bis 12, wobei das Zerkleinern in Schritt (b) bei Normaldruck im Prozessraum durchgeführt wird.
15. Verfahren nach einer der vorhergehenden Ausführungsformen, wobei das Zerkleinern in Schritt (b) bei einer Temperatur im Prozessraum von 20 bis 200 °C durchgeführt wird.
16. Verfahren nach Ausführungsform 15, wobei das Zerkleinern in Schritt (b) bei einer Temperatur im Prozessraum von 20 bis 30 °C durchgeführt wird.
17. Verfahren nach Ausführungsform 15, wobei das Zerkleinern in Schritt (b) bei einer Temperatur im Prozessraum von 40 °C oder darüber durchgeführt wird, vorzugsweise bei 60 °C oder darüber, bevorzugter bei einer Temperatur im Bereich von 90 bis 200 °C, besonders bevorzugt von 90 bis 150 °C.
18. Verfahren nach einer der vorhergehenden Ausführungsformen, wobei die Batterieteile einen Durchmesser oder eine maximale Ausdehnung von 100 mm oder darunter aufweisen, bevorzugt 50 mm oder darunter, besonders bevorzugt 20 mm oder darunter.
19. Verfahren nach einer der vorhergehenden Ausführungsformen, wobei mit dem Trocknen innerhalb von 10 min nach einer Beendigung des Zerkleinerns begonnen wird, vorzugsweise innerhalb von 3 min, bevorzugter innerhalb von 1 min.
20. Verfahren nach einer der vorhergehenden Ausführungsformen, wobei das Gas in Schritt (c) über einen Filter abgezogen wird, bevorzugt über einen Brüdenfilter.
21. Verfahren nach einer der vorhergehenden Ausführungsformen, wobei das Trocknen in Schritt (c) unter Vakuum im Prozessraum durchgeführt wird, vorzugsweise bei einem Druck von 100 mbar oder darunter, bevorzugter bei 50 mbar oder darunter, besonders bevorzugt bei einem Druck im Bereich von 10 bis 50 mbar.
22. Verfahren nach Ausführungsform 21, wobei beim Trocknen in Schritt (c) eine Vakuumpumpe in einem Hysteresemodus betrieben wird, um ein Vakuum im Prozessraum zu erzeugen, wobei die Leistung der Vakuumpumpe vorzugsweise zwischen 0 und 150 kW alterniert, bevorzugter zwischen 0 und 100 kW, besonders bevorzugt zwischen 0 und 60 kW.
23. Verfahren nach einer der vorhergehenden Ausführungsformen, wobei das Trocknen in Schritt (c) bei einer Temperatur im Prozessraum von 60 °C oder darüber durchgeführt wird, bevorzugt bei einer Temperatur im Bereich von 90 bis 200 °C.
24. Verfahren nach einer der vorhergehenden Ausführungsformen, wobei der Prozessraum nach Schritt (b) verkleinert wird.
25. Verfahren nach einer der vorhergehenden Ausführungsformen, wobei die bereitgestellte Batterie einen Elektrolyten enthält, der im abgetrennten Gas zumindest teilweise enthalten ist.
26. Verfahren nach Ausführungsform 25, wobei bei einem Druck von 10 mbar ein Siedepunkt bzw. ein oberes Ende eines Siedebereichs des Elektrolyten bei einer Temperatur von 180 °C oder darunter liegt, bevorzugter bei 150 °C oder darunter, besonders bevorzugt bei 130 °C oder darunter.
27. Verfahren nach Ausführungsform 25 oder 26, wobei nach Schritt (c) ein verbleibender Anteil des Elektrolyten in den Batterieteilen bei 0,1 Gew% oder darunter liegt, bevorzugt bei 0,01 Gew% oder darunter, besonders bevorzugt bei 0,002 Gew% oder darunter, bezogen auf das Gesamtgewicht der Batterieteile.
28. Verfahren nach einer der vorhergehenden Ausführungsformen, wobei das Verpacken in Schritt (d) im selben Prozessraum durchgeführt wird wie die Schritte (b) und (c).
29. Verfahren nach einer der vorhergehenden Ausführungsformen, wobei das Verpacken in Schritt (d) unter Normaldruck durchgeführt wird.
30. Verfahren nach einer der vorhergehenden Ausführungsformen, wobei die getrockneten Batterieteile in Schritt (d) in einer kunststoffhaltigen Verpackung verpackt werden, vorzugsweise in einer Barriereverpackung.
31. Verfahren nach einer der vorhergehenden Ausführungsformen, wobei die getrockneten Batterieteile in Schritt (d) in einer Vakuumverpackung verpackt werden.
32. Verfahren nach einer der vorhergehenden Ausführungsformen, wobei die Verpackung verschweißt wird.
33. Verfahren nach einer der vorhergehenden Ausführungsformen, wobei die getrockneten Batterieteile in Schritt (d) zu je 1 bis 30 kg verpackt werden, vorzugsweise zu je 1 bis 25 kg, bevorzugter zu je 1 bis 20 kg.
34. Verfahren nach einer der vorhergehenden Ausführungsformen, weiters umfassend Schritt (e): Abtrennen eines Elektrolyten vom abgetrennten Gas.
35. Verfahren nach Ausführungsform 34, wobei der Anteil des Elektrolyten am Gesamtgewicht des Gases bei 50 Gew% oder mehr liegt, bevorzugter bei 70 Gew% oder mehr, besonders bevorzugt bei 90 Gew% oder mehr.
36. Verfahren nach Ausführungsform 34 oder 35, wobei der Elektrolyt in Schritt (e) durch Kondensation vom Gas abgetrennt wird.
37. Verfahren nach Ausführungsform 36, wobei das Gas in Schritt (e) auf eine Temperatur von 30 °C oder darunter abgekühlt wird, bevorzugt auf 15 °C oder darunter, besonders bevorzugt auf 5 °C oder darunter, um den Elektrolyten abzutrennen.
38. Verfahren nach einer der Ausführungsformen 34 bis 37, wobei der Anteil des abgetrennten Elektrolyten bei 95 Gew% oder darüber liegt, bevorzugter bei 99 Gew% oder darüber, bezogen auf das Gesamtgewicht des in der bereitgestellten Batterie enthaltenen Elektrolyten.
39. Verfahren nach einer der Ausführungsformen 34 bis 38, wobei das abgetrennte Gas nach Schritt (e) gereinigt wird.
40. Verfahren nach Ausführungsform 39, wobei ein im abgetrennten Gas enthaltener Stickstoff zumindest teilweise abgetrennt wird.
41. Verfahren nach einer der vorgehenden Ausführungsformen, wobei das Verfahren in einem Container durchgeführt wird.
42. Mobile Vorrichtung zur Verwertung einer Batterie, insbesondere einer Altbatterie, mit dem Verfahren nach einer der Ausführungsformen 1 bis 41, aufweisend
   eine Aufgabeeinheit zum Aufgeben der Batterie,
   eine Zerkleinerungseinheit zum Zerkleinern der zumindest teilweise entladenen Batterie,
   eine Trocknungseinheit zum Trocknen der Batterieteile, und
   eine Verpackungseinheit zum Verpacken der getrockneten Batterieteile,
   wobei die Zerkleinerungseinheit und die Trocknungseinheit im selben Prozessraum angeordnet sind.
43. Mobile Vorrichtung nach Ausführungsform 42, wobei die mobile Vorrichtung eingerichtet ist, in einem Container untergebracht zu werden.
44. Mobile Vorrichtung nach Ausführungsform 43, wobei der Container ein Container nach der Norm ISO 668:2020-01 ist.
45. Mobile Vorrichtung nach Ausführungsform 43 oder 44, wobei der Container ein 40-Fuß-Container ist, bevorzugt ein 20-Fuß-Container, besonders bevorzugt ein 10-Fuß-Container.
46. Mobile Vorrichtung nach einer der Ausführungsformen 42 bis 45, wobei im Prozessraum eine Trennvorrichtung angeordnet ist, die eingerichtet ist, die Aufgabeeinheit und die Zerkleinerungseinheit von der Trocknungseinheit und der Verpackungseinheit zu trennen.
47. Mobile Vorrichtung nach Ausführungsform 46, wobei die Trennvorrichtung eine Tür aufweist, insbesondere eine Schiebetür oder eine Klapptür.
48. Mobile Vorrichtung nach Ausführungsform 46 oder 47, wobei die Trennvorrichtung ein feuerfestes Material umfasst, vorzugsweise Stahl und/oder Aluminium.
49. Mobile Vorrichtung nach einer der Ausführungsformen 42 bis 48, wobei an den Prozessraum eine Vakuumpumpe zum Aufbau der Schutzatmosphäre angeschlossen ist.
50. Mobile Vorrichtung nach einer der Ausführungsformen 42 bis 49, wobei die Zerkleinerungseinheit eine Rotorschere aufweist.
51. Mobile Vorrichtung nach einer der Ausführungsformen 42 bis 50, wobei die Trocknungseinheit einen Schaufeltrockner aufweist.
52. Mobile Vorrichtung nach einer der Ausführungsformen 42 bis 51, wobei die Trocknungseinheit einen Filter zum Abziehen des Gases aufweist, vorzugsweise einen Brüdenfilter.
53. Mobile Vorrichtung nach Ausführungsform 52, wobei dem Filter ein Verdampfer nachgeschaltet ist.
54. Mobile Vorrichtung nach einer der Ausführungsformen 42 bis 53, wobei die Trocknungseinheit ein Autoklav ist.
55. Mobile Vorrichtung nach einer der Ausführungsformen 42 bis 54, wobei die Trocknungseinheit in einem Betriebszustand der mobilen Vorrichtung unterhalb von der Zerkleinerungseinheit angeordnet ist, und/oder wobei die Verpackungseinheit in einem Betriebszustand der mobilen Vorrichtung unterhalb von der Trocknungseinheit angeordnet ist.
56. Mobile Vorrichtung nach einer der Ausführungsformen 42 bis 55, weiters aufweisend eine Entladungseinheit zum zumindest teilweise Entladen der Batterie, wobei die Entladungseinheit vor der Aufgabeeinheit angeordnet ist.
57. Mobile Vorrichtung nach einer der Ausführungsformen 42 bis 56, weiters aufweisend eine Demontageeinheit zum Zerlegen eines Batteriemoduls oder eines Batteriepacks.
58. Mobile Vorrichtung nach Ausführungsform 57, wobei die Demontageeinheit vor der Aufgabeeinheit angeordnet ist, und wobei, wenn die mobile Vorrichtung eine Entladungseinheit aufweist, die Demontageeinheit der Entladungseinheit vorzugsweise nachgeordnet ist.
59. Verpackung, in welcher 1 bis 30 kg Batterieteile enthalten sind, erhältlich durch ein Verfahren nach einer der Ausführungsformen 1 bis 41.
60. Verpackung nach Ausführungsform 59, wobei 1 bis 25 kg Batterieteile in der Verpackung verpackt sind, vorzugsweise 1 bis 20 kg.
61. Verpackung nach Ausführungsform 59 oder 60, wobei die Batterieteile einen Durchmesser oder eine maximale Ausdehnung von 100 mm oder darunter aufweisen, bevorzugt 50 mm oder darunter, besonders bevorzugt 20 mm oder darunter.
62. Verpackung nach einer der Ausführungsformen 59 bis 61, wobei die Batterieteile einen Anteil eines Elektrolyten von 0,1 Gew% oder darunter aufweisen, vorzugsweise 0,01 Gew% oder darunter, besonders bevorzugt 0,002 Gew% oder darunter, bezogen auf das Gesamtgewicht der Batterieteile.
63. Verpackung nach einer der Ausführungsformen 59 bis 62, wobei die Verpackung eine kunststoffhaltige Verpackung ist, vorzugsweise eine Barriereverpackung.
64. Verpackung nach einer der Ausführungsformen 59 bis 63, wobei die Verpackung verschweißt ist.
65. Verpackung nach einer der Ausführungsformen 59 bis 64, wobei die Verpackung eine Vakuumverpackung ist.

Der Begriff "Batterie" umfasst in dieser Anmeldung sowohl eine nicht wiederaufladbare Batterie als auch eine wiederaufladbare Batterie (genannt auch Akkumulator). Vorzugsweise ist die Batterie eine Lithium-Ionen-Batterie, insbesondere ein Lithium-Ionen-Akkumulator.

Unter einem "Prozessraum" wird in dieser Anmeldung insbesondere ein Raum verstanden, der in einem Betriebsmodus (in verfahrenstechnischer Hinsicht) als einheitlicher Raum (mit einheitlicher Atmosphäre) behandelt werden kann. Vorzugsweise kann dieser Raum (in diesem Betriebsmodus) mit einer einzigen Heizung beheizt und/oder mit einer einzigen Vakuumpumpe evakuiert werden.

Die Erfindung wird nachstehend anhand einer Figurenbeschreibung weiter erläutert.
Fig. 1 zeigt den schematischen Aufbau einer mobilen Vorrichtung.
Fig. 2 zeigt einen Längsschnitt eines Ausschnitts der mobilen Vorrichtung der Fig. 1.

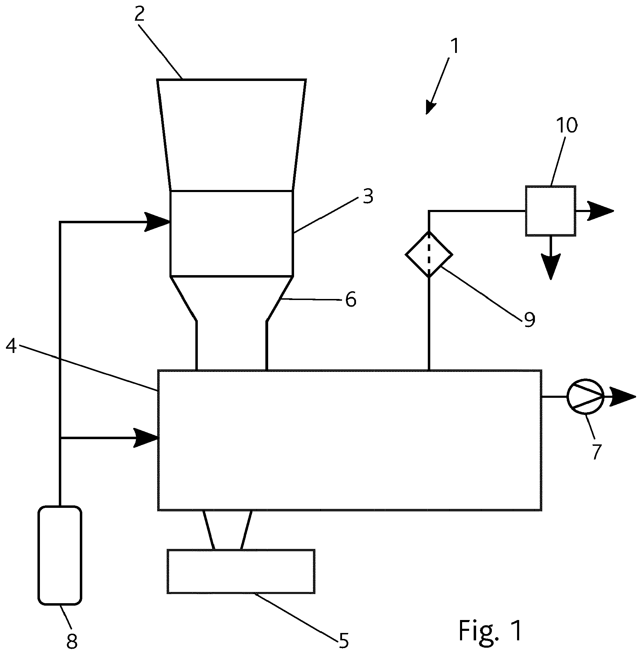

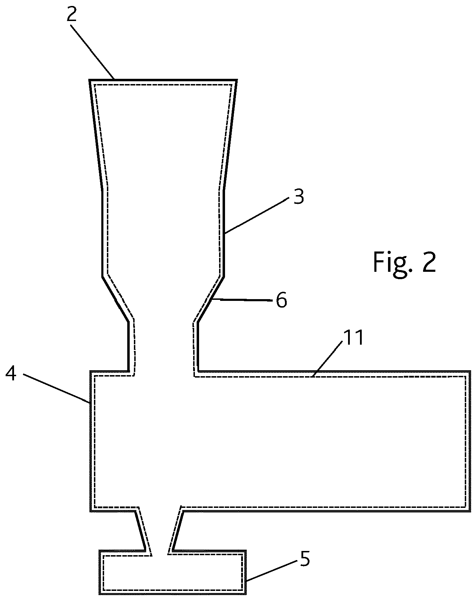

Die in Fig. 1 dargestellte mobile Vorrichtung 1 weist eine Aufgabeeinheit 2, eine Zerkleinerungseinheit 3, eine Trocknungseinheit 4 und eine Verpackungseinheit 5 auf, die im selben Prozessraum 11 (dargestellt in Fig. 2) angeordnet sind. Weiters ist im Prozessraum 11 eine Trennvorrichtung 6 angeordnet, mit der die Aufgabeeinheit 2 und die Zerkleinerungseinheit 3 von der Trocknungseinheit 4 und der Verpackungseinheit 5 getrennt werden können. Die Trennvorrichtung 6 umfasst Stahl als feuerfestes Material und weist eine Klapptür auf (nicht dargestellt). Zur Durchführung des Verfahrens wird im Prozessraum 11 eine Schutzatmosphäre mittels eines fraktionierten Vakuumverfahrens unter Verwendung einer Vakuumpumpe 7 hergestellt. Die Schutzatmosphäre umfasst zumindest 98 Vol% Stickstoff, bezogen auf das Gesamtvolumen der Schutzatmosphäre. Der Stickstoff wird aus dem Behälter 8 über eine erste Einlassöffnung in die Zerkleinerungseinheit 3 und über eine zweite Einlassöffnung in die Trocknungseinheit 4 eingespeist. Ein Wasserpartialdruck der Schutzatmosphäre liegt unter 50 Pa und ein Sauerstoffpartialdruck liegt unter 30 mbar. Eine teilweise entladene Batterie wird der Aufgabeeinheit 2 zugegeben und dann in der Zerkleinerungseinheit 3 mittels einer Rotorschere bei 40 mbar zerkleinert. Während des Zerkleinerns wird die Trocknungseinheit 4 bereits beheizt, sodass aufgrund der Abwärme der Trocknungseinheit 4 auch das Zerkleinern bei einer erhöhten Temperatur von 40 °C oder darüber erfolgt.

Wie Fig. 1 entnehmbar ist, ist die Trocknungseinheit 4 unterhalb der Zerkleinerungseinheit 3 angeordnet, sodass die erhaltenen Batterieteile schwerkraftsbedingt von der Zerkleinerungseinheit 3 in die Trocknungseinheit 4 fallen können. Danach kann der Prozessraum 11 durch Schließen der Klapptür der Trennvorrichtung 6 verkleinert werden, sodass nur noch der Teil des Prozessraums 11 unter Vakuum und erhöhter Temperatur betrieben werden und die Schutzatmosphäre aufrechterhalten werden muss, in welchem die Trocknungseinheit 4 und die Verpackungseinheit 5 angeordnet sind. Die Batterieteile werden in der Trocknungseinheit 4 bei 40 mbar und 150 °C getrocknet, dabei wird ein Gas umfassend einen Elektrolyten abgetrennt und über einen Brüdenfilter 9 aus dem Prozessraum 11 abgezogen. Nach dem Trocknen weisen die Batterieteile einen verbleibenden Anteil des Elektrolyten von unter 0,002 Gew% auf, bezogen auf das Gesamtgewicht der Batterieteile. Die getrockneten Batterieteile werden abschließend in der Verpackungseinheit 5 zu je 25 kg in einer Barriereverpackung verpackt. Während des Verpackens bleiben der Druck und die Schutzatmosphäre im Prozessraum 11 unverändert, beheizt wird aber nicht mehr.

Fig. 1 zeigt weiters, dass das über den Brüdenfilter 9 abgezogene Gas nachfolgend einem Verdampfer 10 zugeführt wird, um den Elektrolyten vom Gas abzutrennen. Dabei wird das Gas auf unter 30 °C abgekühlt. Hierdurch können mehr als 99 Gew% des in der bereitgestellten Batterie enthaltenen Elektrolyten rückgewonnen werden.

Ein Ausschnitt der mobilen Vorrichtung 1 der Fig. 1 ist in Fig. 2 im Längsschnitt dargestellt. Daraus ist ersichtlich, dass die Aufgabeeinheit 2, die Zerkleinerungseinheit 3, die Trocknungseinheit 4 und die Verpackungseinheit 5 im selben Prozessraum 11 (durch eine gestrichelte Linie erkenntlich gemacht) angeordnet sind. Dadurch wird das Verfahren sehr effizient gestaltet, da eine Einstellung von Prozessparametern (z.B. Druck, Temperatur) nur für diesen einen Prozessraum ausreichend ist. Eine Schutzatmosphäre mit einem kontrollierten Druck, einer kontrollierten Temperatur und einer kontrollierten Zusammensetzung kann im ganzen Prozessraum 11 vorgesehen werden, sodass das Verfahren reproduzierbar und sicher durchgeführt werden kann.

## Patentansprüche

1. Verfahren zur Verwertung einer Batterie, umfassend die Schritte
(a) Bereitstellen einer zumindest teilweise entladenen Batterie,
(b) Zerkleinern der zumindest teilweise entladenen Batterie in einem Prozessraum (11), um Batterieteile zu erhalten,
(c) Trocknen der Batterieteile in einem Prozessraum (11), um getrocknete Batterieteile und ein abgetrenntes Gas zu erhalten, und
(d) Verpacken der getrockneten Batterieteile in eine Verpackung,
**dadurch gekennzeichnet, dass** die Schritte (b) und (c) im selben Prozessraum (11) durchgeführt werden.

2. Verfahren nach Anspruch 1, **dadurch gekennzeichnet, dass** im Prozessraum (11) eine Schutzatmosphäre vorgesehen ist.

3. Verfahren nach Anspruch 1 oder 2, **dadurch gekennzeichnet, dass** das Trocknen in Schritt (c) bei einem Druck im Prozessraum (11) im Bereich von 10 bis 50 mbar durchgeführt wird.

4. Verfahren nach einem der Ansprüche 1 bis 3, **dadurch gekennzeichnet, dass** beim Trocknen in Schritt (c) eine Vakuumpumpe (7) in einem Hysteresemodus betrieben wird, um ein Vakuum im Prozessraum (11) zu erzeugen.

5. Verfahren nach Anspruch 4, **dadurch gekennzeichnet, dass** die Leistung der Vakuumpumpe (7) im Hysteresemodus zwischen 0 und 60 kW alterniert.

6. Verfahren nach einem der Ansprüche 1 bis 5, **dadurch gekennzeichnet, dass** das Trocknen in Schritt (c) bei einer Temperatur im Bereich von 90 bis 200 °C durchgeführt wird.

7. Verfahren nach einem der Ansprüche 1 bis 6, **dadurch gekennzeichnet, dass** die bereitgestellte Batterie einen Elektrolyten enthält, der im abgetrennten Gas zumindest teilweise enthalten ist, und wobei nach Schritt (c) ein verbleibender Anteil des Elektrolyten in den Batterieteilen bei 0,002 Gew% oder darunter liegt, bezogen auf das Gesamtgewicht der Batterieteile.

8. Verfahren nach einem der Ansprüche 1 bis 7, **dadurch gekennzeichnet, dass** die getrockneten Batterieteile in Schritt (d) zu je 1 bis 30 kg verpackt werden.

9. Verfahren nach einem der Ansprüche 1 bis 8, weiters umfassend Schritt (e): Abtrennen eines Elektrolyten vom abgetrennten Gas.

10. Mobile Vorrichtung (1) zur Verwertung einer Batterie mit dem Verfahren nach einem der Ansprüche 1 bis 9, aufweisend
eine Aufgabeeinheit (2) zum Aufgeben der zumindest teilweise entladenen Batterie,
eine Zerkleinerungseinheit (3) zum Zerkleinern der zumindest teilweise entladenen Batterie,
eine Trocknungseinheit (4) zum Trocknen der Batterieteile, und
eine Verpackungseinheit (5) zum Verpacken der getrockneten Batterieteile,
**dadurch gekennzeichnet, dass** die Zerkleinerungseinheit (3) und die Trocknungseinheit (4) im selben Prozessraum (11) angeordnet sind.

11. Mobile Vorrichtung (1) nach Anspruch 10, **dadurch gekennzeichnet, dass** die mobile Vorrichtung (1) eingerichtet ist, in einem Container untergebracht zu werden.

12. Mobile Vorrichtung (1) nach Anspruch 10 oder 11, **dadurch gekennzeichnet, dass** im Prozessraum (11) eine Trennvorrichtung (6) angeordnet ist, die eingerichtet ist, die Aufgabeeinheit (2) und die Zerkleinerungseinheit (3) von der Trocknungseinheit (4) und der Verpackungseinheit (5) zu trennen.

13. Mobile Vorrichtung (1) nach einem der Ansprüche 10 bis 12, **dadurch gekennzeichnet, dass** die Trocknungseinheit (4) in einem Betriebszustand der mobilen Vorrichtung (1) unterhalb von der Zerkleinerungseinheit (3) angeordnet ist.

14. Mobile Vorrichtung (1) nach einem der Ansprüche 10 bis 13, **dadurch gekennzeichnet, dass** die Verpackungseinheit (5) in einem Betriebszustand der mobilen Vorrichtung (1) unterhalb von der Trocknungseinheit (4) angeordnet ist.

15. Verpackung, in welcher 1 bis 30 kg Batterieteile enthalten sind, erhältlich durch ein Verfahren nach einem der Ansprüche 1 bis 9.
